# EUROPÄISCHE PATENTSCHRIFT

(11) **EP 0 449 910 B1**
(45) Veröffentlichungstag und Bekanntmachung des Hinweises auf die Patenterteilung: **31.03.1993**
(21) Anmeldenummer: 90900815.3
(22) Anmeldetag: 20.12.1989
(51) Int. Cl.: F16B 7/04, E04H 1/12, E04B 2/76

(54) **SCHNELLVERBINDUNGSVORRICHTUNG**
QUICK-ACTION CONNECTING DEVICE
DISPOSITIF D'ASSEMBLAGE RAPIDE

(30) Priorität: 24.12.1988 DE 3843911
(43) Veröffentlichungstag der Anmeldung: 09.10.1991
(73) Patentinhaber: GASSLER, Kurt, D-72820 Sonnenbühl (DE)
(72) Erfinder: GASSLER, Kurt, D-72820 Sonnenbühl (DE)
(74) Vertreter: Möbus, Rudolf, Dipl.-Ing.
(86) Internationale Anmeldenummer: EP8901580
(87) Internationale Veröffentlichungsnummer: WO9007652

(56) Entgegenhaltungen:
- DE-A- 2 817 518
- DE-C- 3 607 849
- DE-U- 1 970 271
- FR-A- 2 454 551
- NL-A- 6 915 210

## Beschreibung

Die Erfindung betrifft Wandungs- oder Gestellteile für zerlegbare Messebauten und eine Schnellverbindungsvorrichtung zu ihrer gegenseitigen Verbindung, mit den im Oberbegriff des Hauptanspruches aufgeführten Merkmalen.

Mittels einer Schnellverbindungsvorrichtung miteinander rasch zusammensetzbare und ebenso rasch wieder voneinander lösbare Wandung- oder Gestellteile sind durch die DE-A-2 817 518 bekannt. Die dort verwendete Schnellverbindungsvorrichtung hat jedoch den Nachteil, daß ein Zusammenhalt der miteinander zu verbindenden Wandungs- oder Gestellteile erst nach einem Spannen der Schnellverbindungsvorrichtung geschaffen ist. Dies erschwert den Zusammenbau und auch den Abbau der Messebauten, weil die Wandungs- oder Gestellteile nicht einfach in eine gewünschte Stellung zusammengeschoben und dann mit weiteren Teilen zusammengesetzt werden können, bevor nicht die Schnellverbindungsteile gespannt werden. Sicherheitshalber muß immer ein erstes Verspannen von zwei miteinander verbindenden Teilen erfolgen, bevor ein Ausrichten auf ein drittes Bauteil erfolgen kann, und ein endgültiges Ausrichten kann anschließend erst wieder nach einem Lösen der Schnellverbindungsvorrichtungen erfolgen. Dabei können dann die einzelnen Schnellverbindungsvorrichtungen nur nacheinander gelöst und wieder gespannt werden, wenn man die Gefahr vermeiden will, daß einzelne Teile sich wieder voneinander lösen.

Den vorstehend geschilderten Nachteil weisen auch Schnellverbindungsvorrichtungen auf, die in der DE-C-3 607 849 und in der FR-U-2 454 551 offenbart sind. Dieser Nachteil liegt darin begründet, daß bei allen diesen bekannten Schnellverbindungsvorrichtungen aus U-förmig gebogenen Blattfederschenkeln gebildete Riegelkörper, die durch einen zwischen zwei Blattfederschenkel hineinbewegbaren Drehkörper in eine Spannstellung auseinanderbewegt werden müssen, so vorgespannt sind, daß sie in ihrer durch den Drehkörper nicht beaufschlagten Stellung einwärts zurückfedern, so daß ihre Riegelnasen dicht gegeneinanderliegen und sich durch eine Hinterschneidungen aufweisende Öffnung eines von zwei miteinander zu verbindenden Wandungs- oder Gestellteilen frei einschieben oder wieder zurückziehen lassen. Dadurch gewähren die Riegelnasen der Schnellverbindungsvorrichtung in deren Freigabestellung überhaupt keine gegenseitige Halterung der beiden miteinander zu verbindenden Teile, auch wenn die Riegelnasen in die Hinterschneidungen aufweisende Öffnung eingesteckt sind.

Durch die DE-U-1 970 271 ist zwar eine Verriegelungsvorrichtung mit einer U-förmig gebogenen Blattfeder bekannt, deren U-Schenkel im unverriegelten Zustand in die Riegelstellung auffedern. Sie hat jedoch den Nachteil, daß die aufgefederten U-Schenkel noch keine Klemmwirkung haben und daß sich die Verriegelungsvorrichtung in unverriegeltem Zustand nicht einfach wieder durch Herausziehen aus einer Verankerungsöffnung gegen die Federkraft der Blattfeder lösen läßt und daher nicht als Schnellverbindungsvorrichtung bezeichnet werden kann.

Die U-Schenkelenden sind zu widerhakenartigen Riegelnasen ausgebogen. Das Spannen der Vorrichtung erfolgt durch eine Längsverschiebung der Blattfeder und ein Festziehen der widerhakenartigen Riegelnasen gegen Hinterschnittflächen des anzukoppelnden Gestellteiles, nicht durch ein Blockieren der U-Schenkel gegen eine Einwärtsbewegung. Eine Freigabe des angekoppelten Gestellteiles im unverriegelten Zustand der Blattfeder ist erst möglich, wenn die widerhakenartigen Riegelnasen durch ein Spezialwerkzeug gegeneinandergezogen werden oder das Gestellteil seitlich von dem die Verriegelungsvorrichtung tragenden anderen Gestellteil abgezogen wird, falls die Hinterschneidungen in einer bis zum Gestellende durchlaufenden und dort offenen Nut ausgebildet sind.

Der Erfindung liegt die Aufgabe zugrunde, die Schnellverbindungsvorrichtung der eingangs genannten Wandungs- oder Gestellteile für zerlegbare Messebauten auf einfache Art so zu gestalten, daß sie einen Zusammenhalt der miteinander zu verbindenden Teile bereits im unverriegelten Zustand erbringt und somit ein gleichzeitiges Zusammensetzen mehrerer Wandungs- oder Gestellteile erleichtert.

Die gestellte Aufgabe wird bei den Wandungs- oder Gestellteilen der eingangs genannten Art mit einer Schnellverbindungsvorrichtung gelöst, die erfindungsgemäß mit den im kennzeichnenden Teil des Hauptanspruches aufgeführten Merkmalen ausgebildet ist.

Dadurch, daß bei der erfindungsgemäß ausgebildeten Vorrichtung der Riegelkörper der Schnellverbindungsvorrichtung so ausgebildet und vorgespannt ist, daß seine beiden U-Schenkel immer in die Riegelstellung auffedern, wird beim Einschieben der Riegelnasen der Schnellverbindungsvorrichtung in eine Hinterschneidungen aufweisende Öffnung eines Wandungs- oder Gestellteiles in der Freigabestellung des drehbaren Spannkörpers der Schnellverbindungsvorrichtung bereits eine lockere Rastverbindung zwischen den miteinander zu verbindenden Teilen erreicht, ohne daß die Schnellverbindungsvorrichtung sofort durch Verdrehen des Drehkörpers in eine Riegelstellung fixiert wird. Durch das Auffedern der beiden U-Schenkel des Riegelkörpers wird diese lockere Rastverbindung zwischen den miteinander zu verbindenden Wandungs- oder Gestellteilen bereits mit dem Einschieben in die mit Hinterschneidungen versehene Öffnung erreicht. Das Einschieben der Riegelnasen des Riegelkörpers in die Öffnung erfolgt problemlos, weil sich die beiden U-Schenkel in der Freigabestellung des Drehkörpers gegen die Federkraft des Riegelkörpers leicht gegeneinanderbewegen lassen.

Die Schnellverbindungsvorrichtung der Wandungs- oder Gestellteile läßt sich in ihrer einfachen Formgebung leicht an Strangpreßprofile mit durchlaufenden hinterschnittenen Nuten und Hohlräumen, aus denen üblicherweise die Gestelle für zerlegbare Messebauten gefertigt sind, anpassen. Die Blattfeder und der Drehkörper können unterschiedlich gestaltet sein. Bei einer möglichen Ausführungsform kann der Drehkörper beispielsweise den Querschnitt eines gleichseitigen Dreiecks mit abgerundeten Ecken und auf mindestens einer Stirnseite eine Stecköffnung für ein Werkzeug zum Verdrehen des Drehkörpers aufweisen. Der Drehkörper wirkt mit Auswölbungen und/oder Einwölbungen des aus der Blattfeder gefertigten Riegelkörpers zusammen, um die Schnellverbindungsvorrichtung in einer Riegelstellung sowohl durch Aufspreizen als auch durch Verspannen in der Einsetzebene zu fixieren. Bei einer Ausführungsform der Schnellverbindungsvorrichtung, die für größere Konstruktionen bevorzugt wird, kann der Drehkörper als doppelarmiger Schwenkhebel ausgebildet sein, dessen einer Arm den auf die U-Schenkel des Riegelkörpers einwirkenden Vorsprung bildet und dessen anderer Arm eine Ansatzstelle für ein Verriegelungswerkzeug bildet. Bei dieser Ausführungsform kann die U-förmige Blattfeder vorteilhafterweise an der U-Basis um einen Lagerzapfen gelegt sein, dessen Achse senkrecht zur Drehachse des Drehkörpers verläuft und der zur Verankerung der Blattfeder in einen der miteinander zu verbindenden Teile mit den Enden in Ausnehmungen dieses Teiles ragt. Die bei dieser Ausführungsform des Riegelkörpers erfolgte Trennung der Verankerungsstelle des Riegelkörpers in einem der zu verbindenden Teile und der Lagerstelle für den Drehkörper ergibt den Vorteil, daß die Lagerstelle für den Drehkörper unsichtbar innerhalb eines der miteinander zu verbindenden Teile anordenbar ist, das in diesem Bereich nur eine auf einer anderen Seite des Teiles befindliche Öffnung zum Einbringen eines Verriegelungswerkzeuges aufweisen muß. Außerdem wird erreicht, daß an der Verankerungsstelle die durch den Drehkörper bewirkte Spannwirkung nur eine Zugkraftbelastung dieser Verankerungsstelle bewirken kann. Beim Spannen des Drehkörpers entstehende Drehmomente können hier keinen Einfluß auf den Verankerungsbereich haben. Dabei kann zweckmäßig ein Abstand zwischen den in den U-Schenkeln der Blattfeder ausgebildeten Lagerstellen für den Drehkörper und der an der U-Basis der Blattfeder gelegenen Verankerungsstelle des Riegelkörpers gewählt werden, die größer ist als die Länge des Lagerzapfens, und die U-Schenkel der Blattfeder können zweckmäßig zwischen der U-Basis und den Lagerstellen für den Drehkörper eben verlaufen.

Die Halterung des Schnellverbindungsvorrichtung in einem der zu verbindenden Teile kann also allein mittels der durch die Lageröffnungen der U-Schenkel der Blattfeder nach außen ragenden Teile des Drehkörpers oder aber durch einen gesonderten, an der U-Basis der Blattfeder ansetzenden Lagerzapfen erfolgen. Die Schnellverbindungsvorrichtung kann nicht durch ein Überdrehen zerstört werden. Bei dem erstgenannten Ausführungsbeispiel mit dem dreieckigen Drehkörper ist dies durch die symmetrische Drehkörperform gewährleistet. Bei der Ausbildung des Drehkörpers als doppelarmigen Schwenkarm ist die Überdrehsicherung dadurch gegeben, daß nach Erreichen der Riegelstellung das verwendete Verriegelungswerkzeug an einem der zu verbindenden Teile zur Anlage kommt und nicht mehr weiterverschwenkt werden kann.

Zweckmäßig können die Schenkel der U-förmig gebogenen Blattfeder jeweils in zwei nebeneinander ausgebildeten Riegelnasen enden, die zusammen mit einem endeinwärts ausgebildeten Gegenvorsprung eine Rastrinne begrenzen können. Durch die beiden nebeneinander ausgebildeten Riegelnasen wird eine verbesserte Sicherung der Schnellverbindungsvorrichtung gegen ein Verdrehen erreicht. In jedem Falle entfällt ein gesondertes, mit Anschlägen und Führungsflächen versehenes Gehäuse für die Schnellverbindungsvorrichtung.

Vorteilhafterweise kann die Blattfeder aus einem härteren Material, wie Stahl, als die miteinander zu verbindenden Teile, die aus Leichtmetall oder Kunststoffmaterial bestehen können, gefertigt sein. Beim Spannen der Blattfeder können sich dadurch die Riegelnasen in die Oberfläche des zu haltenden Teiles etwas eindrücken oder die Wandung dieses Teiles innerhalb des Dehnbarkeitsbereiches seines Materials auswölben. Auf diese Weise wird ein Entlangrutschen der Blattfeder an diesem Teil auch bei einer Belastung des anderen Teils in der Längsrichtung des erstgenannten Teiles verhindert.

Nachfolgend werden zwei Ausführungsbeispiele und verschiedene Anwendungsfälle einer erfindungsgemäß ausgebildeten Schnellverbindungsvorrichtung anhand der beiliegenden Zeichnung näher erläutert.

Im einzelnen zeigen:
- Fig. 1: eine Seitenansicht von zwei gleichen, spiegelbildlich verkehrt zueinander angeordneten Schnellverbindungsvorrichtungen einer ersten Ausführungsform, die eine davon im Längsschnitt entlang der Linie I - I in Fig. 2;
- Fig. 2: eine Draufsicht auf die beiden Schnellverbindungsvorrichtungen der Fig. 1;
- Fig. 3: eine Vorderansicht einer der Schnellverbindungsvorrichtungen in Richtung des Pfeiles III in Fig. 1;
- Fig. 4 und 5: eine Schnellverbindungsvorrichtung, eingesetzt in eine Profilschiene, und ein Paar von entsprechend Fig. 1 in einem mit der Profilschiene gekoppelten Verbindungsteil angeordneten Schnellverbindungsvorrichtungen, in Fig. 4 im Schnitt entlang der Linie IV - IV in Fig. 5;
- Fig. 6: zwei Schnellverbindungsvorrichtungen in einem anderen Anwendungsfall;
- Fig. 7 und 8: zwei Schnellverbindungsvorrichtungen in einem dritten Anwendungsfall, in Fig. 7 im Schnitt entlang der Linie VII - VII in Fig. 8;
- Fig. 9: eine gegenüber den Fig. 1 bis 3 abgewandelte Ausführungsform einer Schnellverbindungsvorrichtung in Draufsicht;
- Fig. 10: einen Längsschnitt durch die Schnellverbindungsvorrichtung entlang der Linie X - X in Fig. 9;
- Fig. 11: eine Vorderansicht der Schnellverbindungsvorrichtung in Richtung des Pfeiles XI in Fig. 10;
- Fig. 12: eine zweite Ausführungsform einer Schnellverbindungsvorrichtung, verankert in einer Profilschiene, beim Einsetzen ihrer Riegelnasen in eine zweite Profilschiene, teilweise im Schnitt;
- Fig. 13: einen Schnitt entlang der Linie XIII - XIII in Fig. 12;
- Fig. 14: eine Fig. 12 entsprechende Darstellung nach dem Einrasten der Riegelnasen der Schnellverbindungsvorrichtung in der Profilschiene, mit angesetztem Verriegelungswerkzeug, aber noch in seiner Ruhestellung befindlichem Drehkörper;
- Fig. 15: einen Schnitt entlang der Linie XV - XV in Fig. 14;
- Fig. 16: eine den Fig. 12 und 14 entsprechende Darstellung mit in Spannstellung gebrachtem Drehkörper der Schnellverbindungsvorrichtung;
- Fig. 17: einen Schnitt entlang der Linie XVII - XVII in Fig. 16;
- Fig. 18a und 18b: eine Draufsicht auf eine dritte Ausführungsform der Schnellverbindungsvorrichtung, einmal in Riegelstellung und einmal in Lösestellung des Drehkörpers;
- Fig. 19a und 19b: einen zentralen Längsschnitt durch die Schnellverbindungsvorrichtung entlang der Linie XIX - XIX in Fig. 18a, 18b;
- Fig. 20a und 20b: eine Unteransicht der Schnellverbindungsvorrichtung in den beiden Stellungen des Drehkörpers.

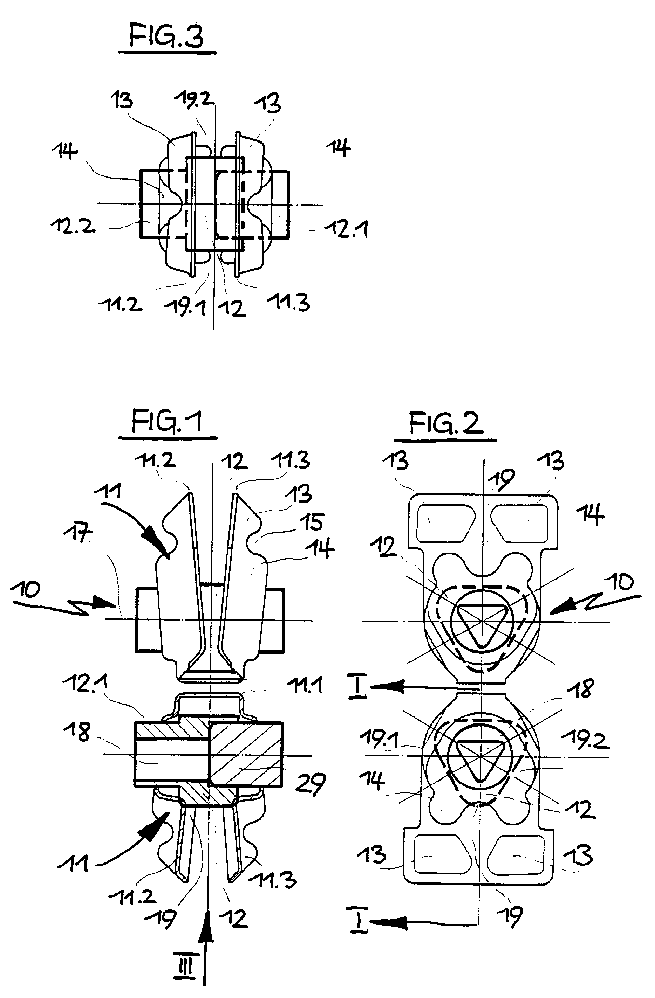

Die in den Fig. 1 bis 3 paarweise dargestellte Schnellverbindungsvorrichtung 10 besteht aus einem Riegelkörper 11 und einem Drehkörper 12. Der Riegelkörper ist aus einer U-förmig gebogenen profilierten Blattfeder mit einem Basisteil 11.1 und zwei U-Schenkeln 11.2 und 11.3 gebildet. An den verbreiteten freien Enden der beiden U-Schenkel 11.2 und 11.3 sind durch Ausprägungen zwei nebeneinander liegende Riegelnasen 13 gebildet, die zusammen mit einem ebenfalls durch eine Ausprägung gebildeten Gegenvorsprung 14 eine Rastrinne 15 auf der Außenseite eines jeden U-Schenkels 11.2 und 11.3 begrenzen.

Beide U-Schenkel 11.2 und 11.3 sind im Bereich des Gegenvorsprunges 14 mit einer runden Öffnung 16 versehen, die als Lageröffnungen für den zwischen den beiden U-Schenkeln 11.2 und 11.3 angeordneten Drehkörper 12 dienen. Der Querschnitt des Drehkörpers 12 hat die Form eines gleichseitigen Dreiecks mit abgerundeten Ecken, wie aus Fig. 2 ersichtlich ist. An diesen dreieckigen Drehkörper schließt sich mit seiner Mittelachse 17 fluchtend nach einer Seite ein runder und durch die Lageröffnung 16 des einen U-Schenkels 11.2 nach außen vorstehender Lagerzapfen 12.1 an. Auf der Stirnseite dieses Lagerzapfens 12.1 ist eine dreieckige, aus Fig. 2 ersichtliche Stecköffnung 18 zum Einsetzen eines Steckschlüssels ausgebildet, die bis in eine erweiterte Öffnung des Drehkörpers durchgeht, in welche als zweiter Lagerzapfen ein Steckzapfen 29 durch die Lageröffnung 16 des anderen U-Schenkels 11.3 hindurch nachträglich einsetzbar ist.

Die zur Bildung des Gegenvorsprunges 14 in den beiden U-Schenkeln 11.2 und 11.3 gebildeten Ausprägungen sind so geformt, daß auf der Innenseite der U-Schenkel ein erster, mit einer der abgerundeten Ecken des dreieckigen Drehkörpers 12 zusammenwirkender und in Fig. 1 und 2 bezeichneter Anschlag 19 und zwei weitere, mit den beiden anderen Ecken des Drehkörpers 12 zusammenwirkende Anschläge 19.1 und 19.2 entstehen. Bei der in Fig. 1 links und im Schnitt dargestellten Schnellverbindungsvorrichtung 10 ist der Drehkörper 12 in einer Stellung dargestellt, in welcher er mit einer Ecke gegen die inneren Anschläge 19 der beiden U-Schenkel 11.2 und 11.3 drückt und sie dadurch aufspreizt, und mit seinen beiden anderen Ecken an den Anschlägen 19.1 und 19.2 anliegt und die Feder dadurch in ihrer Einschiebebene verspannt. Die drei Anschläge 19, 19.1 und 19.2 sind so angeordnet, daß bei einer Drehbewegung des Drehkörpers 12 um 1/6-Umdrehung zuerst der Anschlag 19 beaufschlagt und die Aufspreizung der U-Schenkel 11.2, 11.3 bewirkt wird, bevor an den Anschlägen 19.1 und 19.2 die Verspannung in der Einschiebebene erfolgt. In Fig. 2 ist an der rechts dargestellten Schnellverbindungsvorrichtung der Drehkörper 12 in einer Stellung eingezeichnet, in welcher er die Anschläge 19, 19.1 und 19.2 der beiden U-Schenkel des Riegelkörpers 11 nicht berührt. Trotzdem sind gemäß Fig. 1 die beiden U-Schenkel 11.2 und 11.3 durch die Federeigenschaft des Riegelkörpers 11 in die Riegelstellung aufgefedert, lassen sich aber gegeneinander einwärts bewegen und dadurch leicht in eine Öffnung eines zu haltenden Teiles einrasten und auch wieder ausrasten.

Bei dem in den Fig. 1 bis 3 dargestellten Ausführungsbeispiel bildet die Stecköffnung 18 einen Teil einer durch den ganzen Drehkörper 12 durchgehenden Öffnung. Durch diese Duchgangsöffnung läßt sich ein Stift zum Ausdrücken des eingesetzten Steckzapfens 29 einführen, wenn ein Riegelkörper 11 ausgewechselt werden soll.

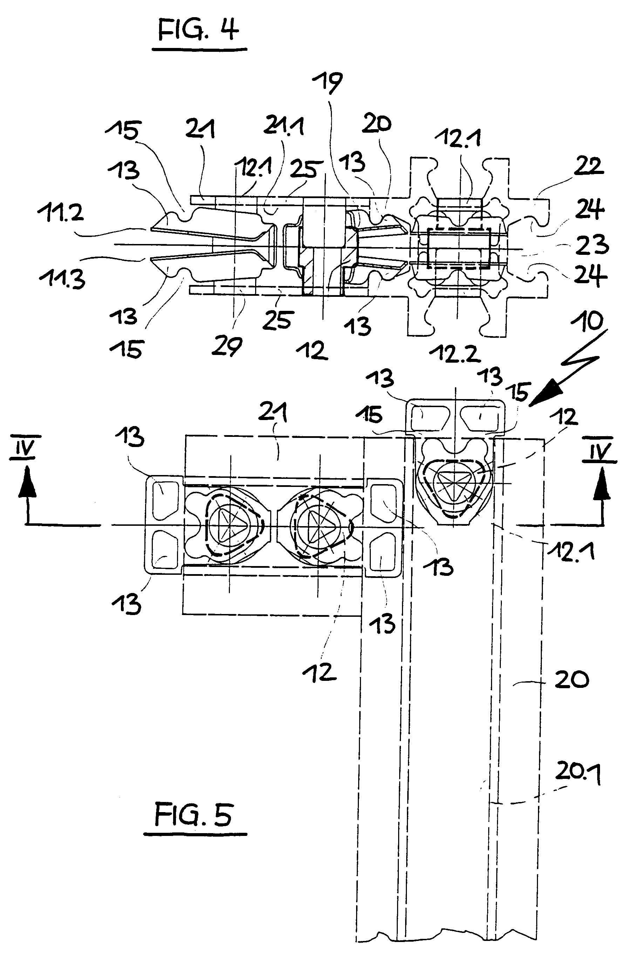

Die Fig. 4 und 5 zeigen ein erstes Anwendungsbeispiel für Schnellverbindungsvorrichtungen 10. In den beiden Figuren sind mit gestrichelten Linien eine hohle stranggepreßte Profilschiene 20 und ein Verbindungsstück 21 dargestellt. Die Profilschiene 20 hat einen quadratischen Querschnitt mit einem zentralen Durchgangskanal 20.1, und auf allen vier Seiten sind zwischen Stegen 22 durchgehende Längsnuten 23 mit Randhinterschneidungen 24 ausgebildet. Das Verbindungsstück 21 hat ebenfalls einen viereckigen Querschnitt mit einem Durchgangskanal 21.1 und mit Längsschlitzen 25 auf zwei sich gegenüberliegenden Seiten.

Am Ende der Profilschiene 20 ist in deren zentralem Durchgangskanal 20.1 eine Schnellverbindungsvorrichtung 10 der aus den Fig. 1 bis 3 dargestellten Art so eingesetzt, daß die beiden U-Schenkel ihres federnden Riegelkörpers mit ihren Riegelnasen 13 und der sich anschließenden Rastrinne 15 aus der Öffnung des zentralen Durchgangskanales 20.1 herausragen. Dabei ragen die beidseitig über die U-Schenkel vorstehenden Lagerzapfen 12.1 und 29 des Drehkörpers 12 in Bohrungen oder Schlitze, die am Grund der Längsnuten 23 der Profilschiene 20 ausgebildet sind (s. Fig. 4). Zum Einsetzen der Schnellverbindungsvorrichtungen 10 in das Verbindungsstück 21 sind die Steckzapfen 29 entfernt. Dadurch läßt sich der Drehkörper 12 in dem Riegelkörper 11 so verschieben, daß sein Lagerzapfen 12.1 fast in der Lageröffnung 16 verschwindet. Erst nach dem Einsetzen wird der Steckzapfen 29 in den Drehkörper 12 eingesetzt.

In das Verbindungsstück 21 sind zwei Schnellverbindungsvorrichtungen 10 in der aus Fig. 1 ersichtlichen spiegelbildlichen Anordnung so eingesetzt, daß sie mit ihren Riegelnasen 13 und der Rastrinne 15 ihrer beiden U-Schenkel 11.2 und 11.3 aus den Enden des Verbindungsteiles 21 herausragen. Dabei ragen wiederum die Lagerzapfen 12.1 und 29 des Drehkörpers dieser Schnellverbindungsvorrichtungen in die Schlitze 25 des Verbindungsstückes 21. Die eine Schnellverbindungsvorrichtung ist in eine der Längsnuten 23 eingerastet, wobei die Riegelnasen 13 in die Hinterschneidungen 24 der Ränder der Längsnut 23 ragen und in dieser Riegelstellung durch den Drehkörper 12 gehalten sind, der mit seinen abgerundeten Ecken gegen die inneren Anschläge 19, 19.1 und 19.2 drückt.

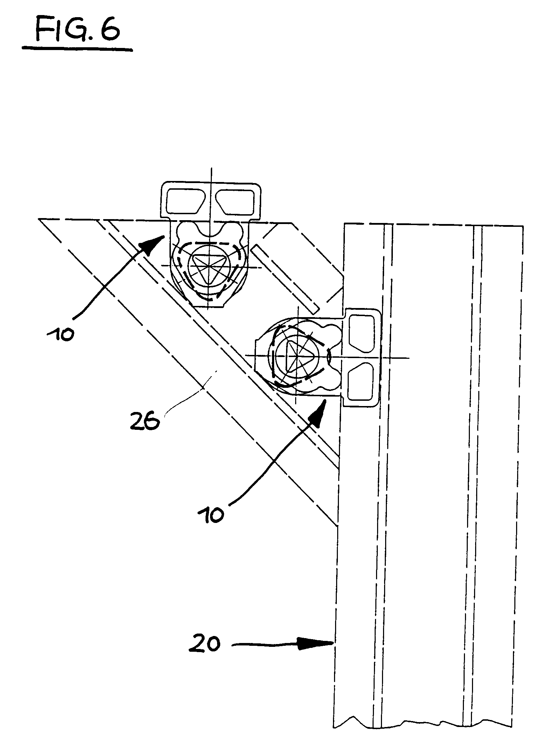

Fig. 6 zeigt einen Anwendungsfall, bei welchem mittels einer Schnellverbindungsvorrichtung 10 ein auf Gehrung geschnittenes Schienenteil 26 mit einer Profilschiene 20 verbunden ist. In das Schienenteil 26 ist eine zweite Schnellverbindungsvorrichtung 10 der in den Fig. 1 bis 3 gezeigten Art in Wartestellung eingesetzt. Mit ihr kann eine zweite und senkrecht zur ersten Profilschiene 20 verlaufende Profilschiene angekoppelt werden.

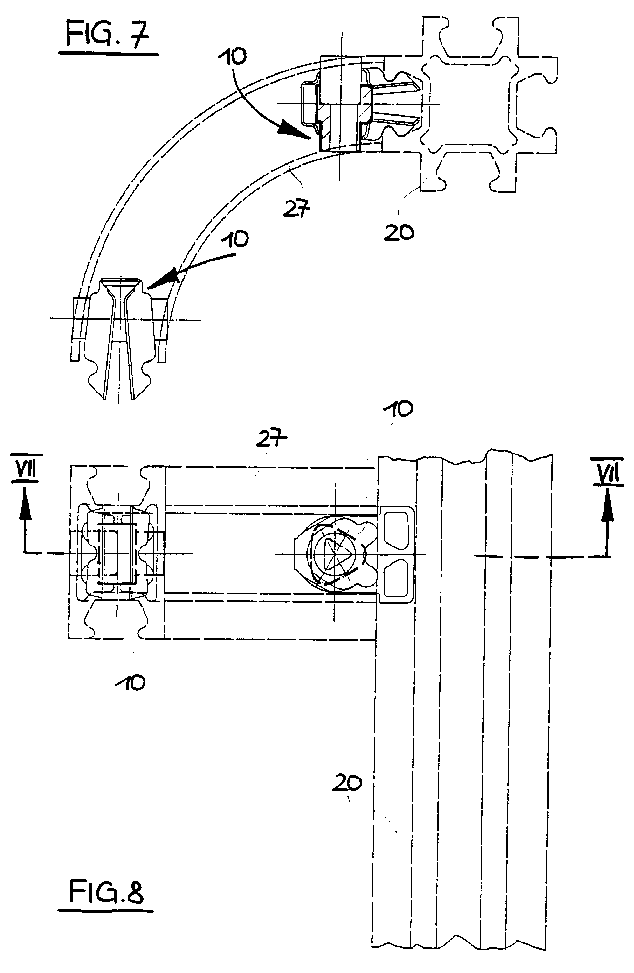

Bei dem in den Fig. 7 und 8 gezeigten Anwendungsbeispiel sind zwei Schnellverbindungsvorrichtungen 10 in die Enden einer gekrümmten Hohlschiene 27 eingesetzt. Mit der einen und in Fig. 7 im Schnitt dargestellten Schnellverbindungsvorrichtung 10 ist die gekrümmte Schiene 27 in der bereits in Verbindung mit den Fig. 4 und 5 beschriebenen Weise mit einer Profilschiene 20 gekoppelt.

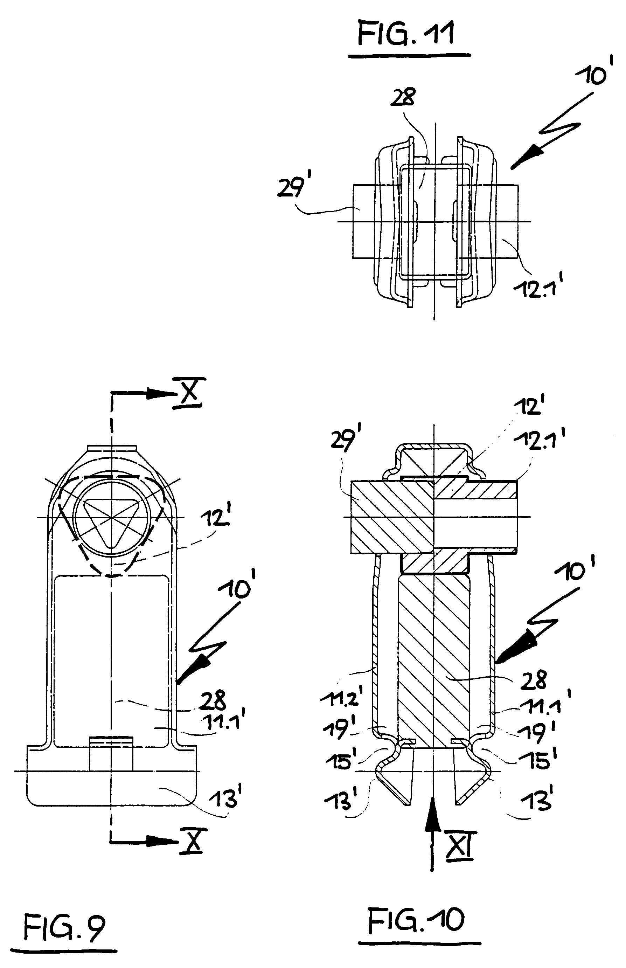

In den Fig. 9 bis 11 ist eine zweite Ausführungsform einer Schnellverbindungsvorrichtung 10′ dargestellt, die sich von der in den Fig. 1 bis 3 gezeigten Ausführungsform dadurch unterscheidet, daß ihr aus einer Blattfeder gebildeter Riegelkörper längere U-Schenkel 11.1′ und 11.2′ und an deren Enden eine einzelne durchgehende Riegelnase 13′ aufweist. Zwischen dem dreieckigen Drehkörper 12′ und den im Bereich der äußeren Rastrinnen 15′ ausgebildeten inneren Anschlägen 19′ der beiden U-Schenkel und dem Drehkörper 12′ ist ein rechteckiger Zwischenkörper 28 angeordnet. Auch bei dieser Ausführungsform ist der Drehkörper 12′ mit Lagerzapfen 12.1′ und 29′ in Lageröffnungen der beiden U-Schenkel 11.1′ und 11.2′ gelagert.

Die Schnellverbindungsvorrichtung kann auch so abgewandelt werden, daß der Drehkörper 12 nur mit seinem Lagerzapfen 12.1 gelagert ist und der Steckzapfen 29 entfällt und durch eine Druckfeder ersetzt ist, die sich an dem einen U-Schenkel des Riegelkörpers abstützt und den Drehkörper 12 in seine Lagerstellung drückt.

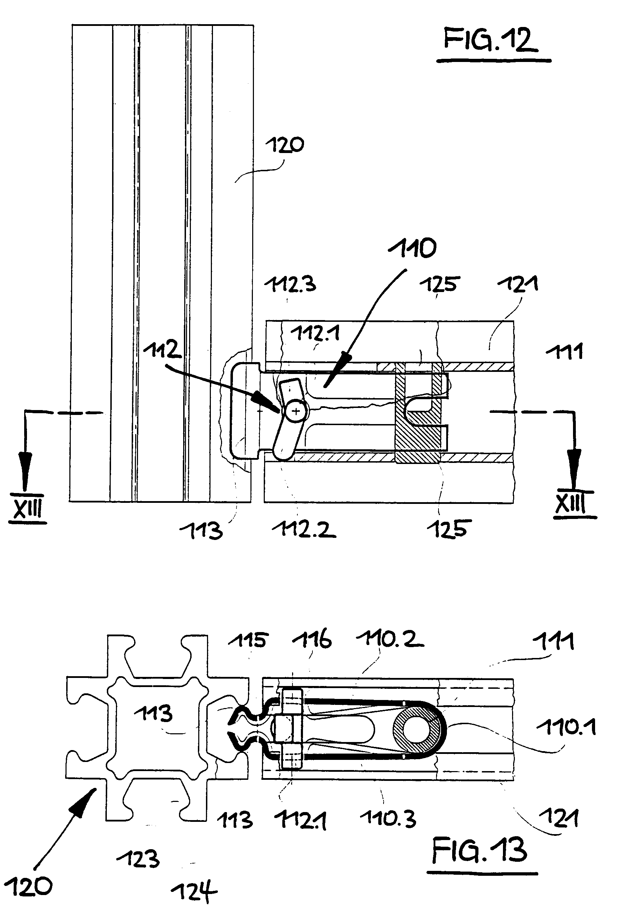

Die Fig. 12 bis 17 zeigen eine zweite Ausführungsform einer Schnellverbindungsvorrichtung 110, die in einem Verbindungsstück 121 verankert ist, das mit einer Profilschiene 120 fest verbunden werden soll. Auch hier weist die Schnellverbindungsvorrichtung 110 einen aus einer U-förmig gebogenen Blattfeder bestehenden Riegelkörper mit einem Basisteil 110.1 und zwei relativ langen U-Schenkeln 110.2, 110.3 auf. Die Verankerung der Schnellverbindungsvorrichtung 110 in dem Verbindungsstück 121 erfolgt mittels eines Lagerzapfens 111, um welchen der Basisteil 110.1 der Blattfeder herumgelegt ist und der mit seinen Enden gemäß Fig. 12 in Öffnungen 125 des Verbindungsteiles 121 ragt. Die verbreiteten freien Enden der beiden U-Schenkel 110.2, 110.3 sind zu Riegelnasen 113 geformt, die über eine Rastrinne 115 in die eben ausgebildeten U-Schenkel 110.2, 110.3 übergehen.

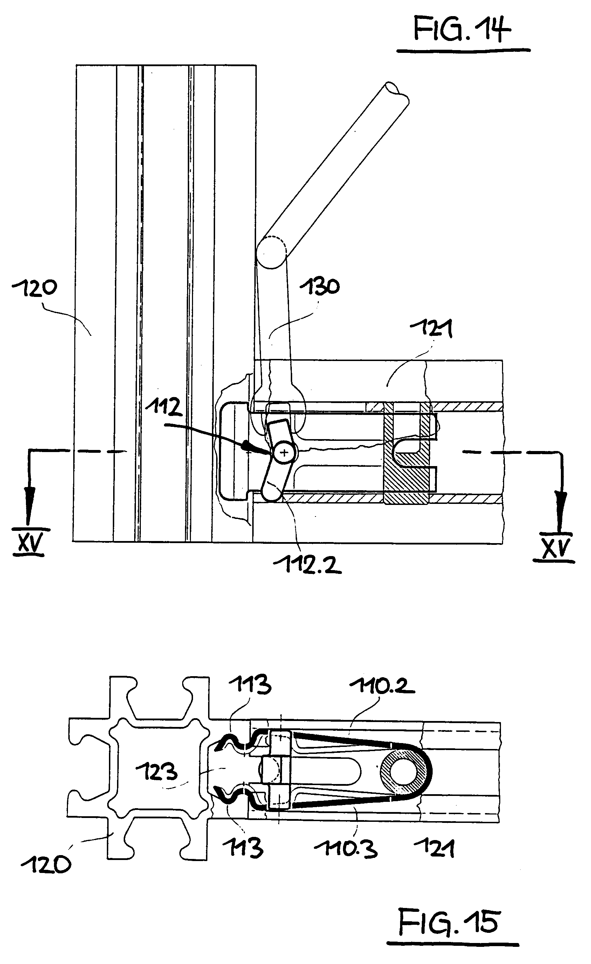

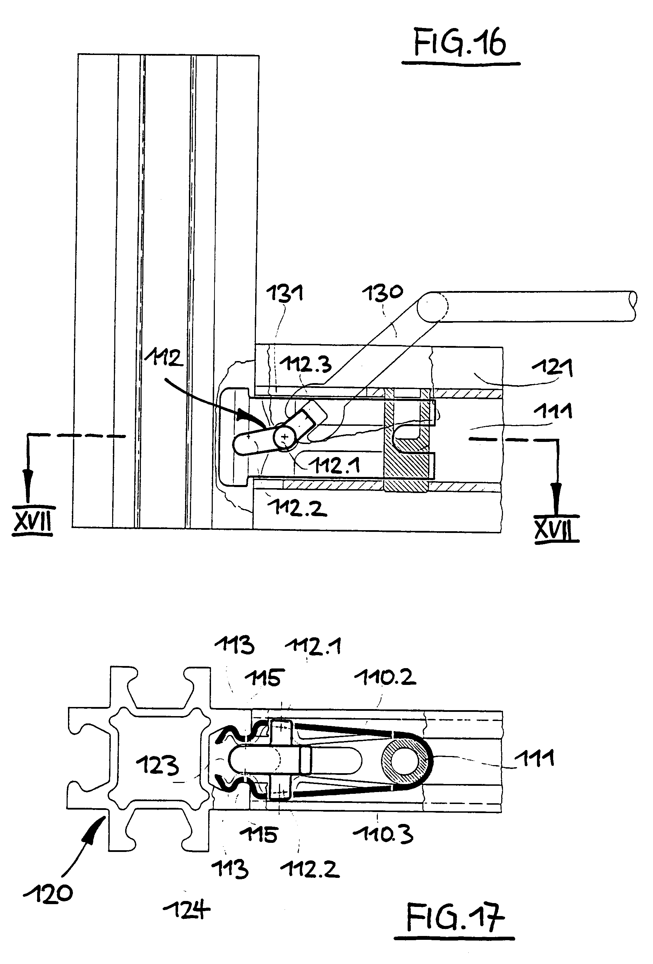

Auch bei der Verriegelungsvorrichtung 110 sind beide U-Schenkel 110.2, 110.3 mit Lageröffnungen 116 für Lagerzapfen 112.1 eines Drehkörpers 112 versehen. Der Drehkörper 112 hat jedoch die Form eines doppelarmigen Schwenkhebels, dessen einer und längerer Arm 112.2 den auf die Enden der U-Schenkel 110.2, 110.3 im Bereich der Rastrinnen 115 einwirkenden Vorsprung bildet, während der andere und kürzere Arm 112.3 eine Ansatzstelle für ein aus den Fig. 14 und 16 ersichtliches Verriegelungswerkzeug 130 bildet.

Die Profilschiene 120 hat den gleichen Querschnitt wie die aus den Fig. 4 und 5 ersichtliche Profilschiene 20, also auch die gleichen äußeren Längsnuten 123 mit Randhinterschneidungen 124.

Die Fig. 12 und 13 zeigen die im Verbindungsteil 121 verankerte Schnellverbindungsvorrichtung 110, wie sie unter Einwärtsfedern der Riegelnasen 113 in die Öffnung einer hinterschnittenen Längsnut 123 eingeschoben wird. Die Figuren 14 und 15 zeigen die Schnellverbindungsvorrichtung nach dem Einschieben der Riegelnasen 113 in die Längsnut 123. Die Riegelnasen 113 der aufgefederten U-Schenkel 110.2, 110.3 sind dabei in die Hinterschneidungen 124 der Längsnut 123 eingerastet. Der Drehkörper 112 befindet sich aber immer noch in seiner Ausgangsstellung, in welcher sein längerer Schwenkarm 112.2 nicht auf den Riegelkörper einwirkt. In dieser Stellung ist also bereits eine Rastverbindung zwischen den Teilen 121 und 120 geschaffen, die jederzeit wieder durch Zurückziehen des Verbindungsteiles 121 gelöst werden kann.

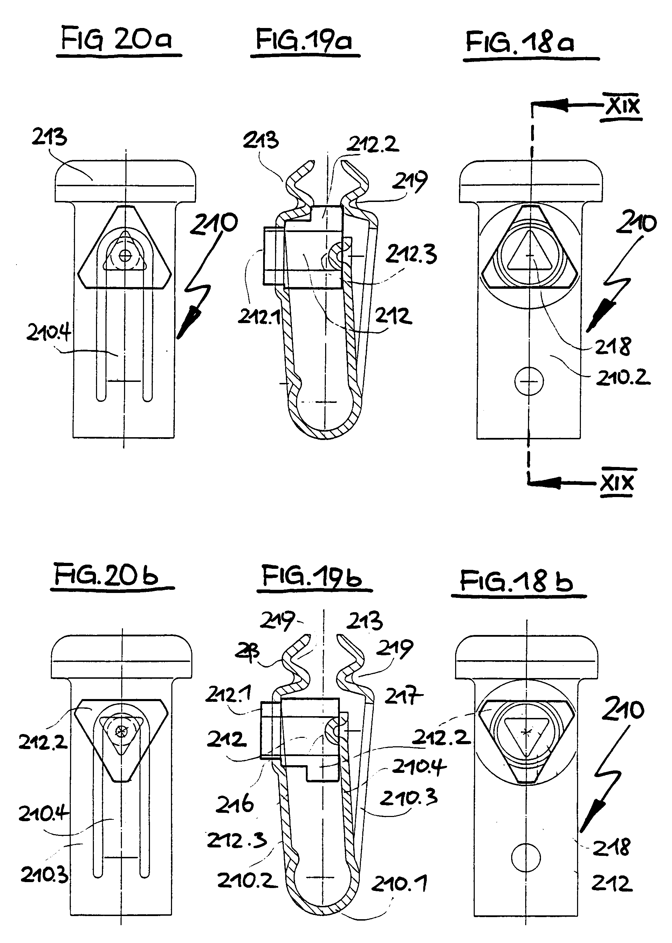

Nach dem Ansetzen eines Verriegelungswerkzeuges 130 gemäß Fig. 14 und Verschwenken des Verriegelungswerkzeuges im Uhrzeigersinne läßt sich der als Schwenkhebel ausgebildete Drehkörper 112 in die aus den Fig. 16 und 17 ersichtliche Verriegelungsstellung bringen, in welcher er die beiden Riegelnasen 113 der Schnellverbindungsvorrichtung 110 in ihrer bereits vorher eingenommenen Raststellung verspannt. Der längere Hebelarm 112.2 ist im Bereich der Rastrinnen 115 zwischen die beiden U-Schenkel 110.2, 110.3 geschoben und blockiert sie dadurch gegen ein Zurückfedern. Die Rastnasen 113 werden beim Verriegeln in die mit Schrägwandungen versehenen Hinterschneidungen 124 der Längsnut 123 eingeschoben, wodurch auch eine Zugkraft auf die Schenkel 110.2, 110.3 ausgeübt wird, die von dem Lagerzapfen 111 aufgenommen wird und durch welche das Ende des Verbindungsstückes 121 gegen die Profilschiene 120 gespannt wird. Das speziell geformte Verriegelungswerkzeug 130, das durch einen schmalen Schlitz 131 im Verbindungsstück 121 einführbar ist und nach Erreichen der Verriegelungsstellung des Drehkörpers 112 gegen den Rand dieses Schlitzes 131 anschlägt, wird abgezogen. Die Lagerzapfen 112.1 des Drehkörpers 120 liegen gemäß den Fig. 12, 14 und 16 hinter einer durchgehenden, glatten und undurchbrochenen Wandung des Verbindungsteiles 121 und bleiben somit unsichtbar.

In den Fig. 18 bis 20 ist ein drittes Ausführungsbeispiel einer Schnellverbindungsvorrichtung 210 dargestellt, die praktisch eine Kombination aus den beiden beschriebenen Ausführungsformen darstellt. Der wiederum aus einer U-förmig gebogenen Blattfeder bestehende Riegelkörper hat die Grundform der Verriegelungsvorrichtung 110, also einen Basisteil 210.1 und zwei relativ lange U-Schenkel 210.2 und 210.3. Der eine U-Schenkel weist eine Lageröffnung 216 für einen Lagerzapfen 212.1 eines Drehkörpers 212 auf. Auf der Stirnseite des Lagerzapfens 212.1 ist eine dreieckige Stecköffnung 218 für einen Steckschlüssel ausgebildet. Der Drehkörper 212 hat wie beim Drehkörper 12 des ersten Ausführungsbeispiels einen Querschnitt in Form eines gleichseitigen Dreiecks mit den Ecken 212.2. Auf seiner dem Lagerzapfen 212.1 entgegengesetzten Ende weist der Drehkörper 212 eine Lagermulde 212.3 auf, mit welcher der Drehkörper 212 auf einem Vorsprung 217 aufsitzt, der am Ende einer aus dem U-Schenkel 210.3 ausgestanzten und ausgebogenen Federzunge 210.4 ausgebildet ist.

Der Drehkörper 212 wirkt mit seinem Ecken 212.2 also wie der Drehkörper 12 beim ersten beschriebenen Ausführungsbeispiel auf innere Anschläge 219 in den Endbereichen der U-Schenkel 210.2 und 210.3 ein, die nahe der Riegelnasen 213 der Blattfeder zum Aufspreizen dieser Riegelnasen 213 ausgebildet sind.

Die Schnellverbindungsvorrichtung 210 kann auch - abweichend von zweiten Ausführungsbeispiel - ohne Lagerzapfen 111 (Fig. 13) eingesetzt werden, wenn man den Lagerzapfen 212.1 des Drehkörpers 212 wie beim ersten Ausführungsbeispiel in eine Ausnehmung einer Profilschiene eintauchen läßt. Zum Einsetzen der Schnellverbindungsvorrichtung 210 in ein Verbindungsstück kann der Drehkörper 212 durch Druck auf seinen Lagerzapfen 212.1 gegen die Rückstellkraft der Federzunge 210.4 zwischen die beiden U-Schenkel 210.2 und 210.3 eingedrückt werden, bis die Stirnseite des Lagerzapfens 212.1 bündig mit der Außenseite des U-Schenkels 210.2 verläuft.

## Patentansprüche

1. Wandungs- oder Gestellteile für zerlegbare Messebauten und eine Schnellverbindungsvorrichtung zu ihrer gegenseitigen Verbindung, wobei die miteinander zu verbindenden Wandungs- oder Gestellteile (20, 21; 120, 121) mit einer Öffnung zur Verankerung der Schnellverbindungsvorrichtung (10; 10′; 110; 210) oder einer Hinterschneidungen (24; 124) aufweisenden Öffnung (23; 123) versehen sind, daß die Schnellverbindungsvorrichtung (10; 10′; 110; 210) einen verstellbaren Riegelkörper (11; 11′; 110; 210) mit einer U-förmig gebogenen Blattfeder, deren U-Schenkelenden zu Riegelnasen (13; 13′; 113; 213) geformt sind, und einen zwischen die U-Schenkel zum Verspannen ragenden und gegen den Riegelkörper bewegbaren Drehkörper (12; 12′; 112; 212) aufweist, daß die beiden U-Schenkel jeweils mit einer Lageröffnung (16; 116; 216) für den zwischen ihnen angeordneten Drehkörper versehen sind, und daß die beiden U-Schenkel (11.2, 11.3; 11.2′, 11.3′; 110.2, 110.3; 210.2, 210.3) des Riegelkörpers (11; 11′; 110; 210) im unverriegelten Zustand in die Riegelstellung auffedern, dadurch gekennzeichnet, daß im verriegelten Zustand der Drehkörper (12; 12′; 112; 212) zwischen die U-Schenkel des Riegelkörpers ragt und sie in der Auffederstellung blockiert und daß sich die U-Schenkel nur in der Freigabestellung des Drehkörpers durch Herausziehen der Schnellverbindungsvorrichtung aus der Verankerungsöffnung gegen die Federkraft des Riegelkörpers gegeneinander bewegen lassen.

2. Schnellverbindungsvorrichtung nach Anspruch 1, dadurch gekennzeichnet, daß der Drehkörper (12; 12′; 212) den Querschnitt eines gleichseitigen Dreiecks mit abgerundeten Ecken und auf mindestens einer Stirnseite eine Stecköffnung (18; 218) für ein Werkzeug zum Verdrehen des Drehkörpers aufweist.

3. Schnellverbindungsvorrichtung nach Anspruch 1 und 2, dadurch gekennzeichnet, daß die Blattfeder (11) an jedem U-Schenkel (11.2, 11.3) eine erste, mit einem der drei Ecken des Drehkörpers (12) zusammenwirkende und eine Aufspreizung der Federschenkel bewirkende Auswölbung (19) und eine zweite und dritte, mit den beiden anderen Ecken des Drehkörpers zusammenwirkende und eine Vorspannung in der Einsetzebene bewirkende Auswölbung (19.1, 19.2) aufweisen, die so angeordnet sind, daß beim Drehen des Drehkörpers (12) in eine Spannstellung zunächst die erste Auswölbung und anschließend zusätzlich die beiden anderen Auswölbungen beaufschlagt werden.

4. Schnellverbindungsvorrichtung nach einem der Ansprüche 1 bis 3, bei welcher der Drehkörper (12) einen durch die Lageröffnungen (16) eines U-Schenkels (11.2, 11.3) nach außen ragenden Teil aufweist, dadurch gekennzeichnet, daß in dem nach außen ragenden Teil (12.1) die Stecköffnung (18) als Durchgangsöffnung ausgebildet ist, und daß durch die Lageröffnung (16) des anderen U-Schenkels (11.3, 11.2) der Blattfeder ein Steckzapfen (29) ragt, der in die Öffnung (18) des Drehkörpers (12) einsteckbar ist.

5. Schnellverbindungsvorrichtung nach Anspruch 1 oder 2, dadurch gekennzeichnet, daß der Drehkörper (212) ein durch die Lageröffnungen (216) eines der U-Schenkel (210.2) der Blattfeder (210) nach außen ragendes Ende (212.1) aufweist, an welchem das Verdrehwerkzeug ansetzbar ist, und daß das andere Ende mit einer Lagermulde (212.3) auf einem Lagervorsprung (217) aufsitzt, der an einer aus dem anderen U-Schenkel (210.3) ausgebogenen Federzunge (210.4) ausgebildet ist.

6. Schnellverbindungsvorrichtung nach Anspruch 1, dadurch gekennzeichnet, daß der Drehkörper (112) als doppelarmiger Schwenkhebel ausgebildet ist, dessen einer Arm (112.2) den auf die U-Schenkel (110.2, 110.3) einwirkenden Vorsprung bildet und dessen anderer Arm (112.3) eine Ansatzstelle für ein Verriegelungswerkzeug (130) bildet.

7. Schnellverbindungsvorrichtung nach Anspruch 1, dadurch gekennzeichnet, daß die U-förmige Blattfeder an der U-Basis (110.1) um einen Lagerzapfen (111) gelegt ist, dessen Achse senkrecht zur Drehachse des Drehkörpers (112) verläuft und der zur Verankerung der Blattfeder in einem der miteinander zu verbindenden Teile (121) mit den Enden in Ausnehmungen (125) dieses Teiles (121) ragt.

8. Schnellverbindungsvorrichtung nach Anspruch 7, dadurch gekennzeichnet, daß die in den U-Schenkeln (110.2, 110,3) der Blattfeder ausgebildeten Lagerstellen (116) des Drehkörpers (112) in einer Entfernung von der U-Basis (110.1) der Blattfeder angeordnet ist, die größer ist als die Länge des Lagerzapfens (111).

9. Schnellverbindungsvorrichtung nach Anspruch 7 oder 8, dadurch gekennzeichnet, daß die U-Schenkel (110.2, 110.3) der Blattfeder zwischen der U-Basis (110.1) und den Lagerstellen (116) für den Drehkörper (112) eben verlaufen.

10. Schnellverbindungsvorrichtung nach einem der Ansprüche 1 bis 9, dadurch gekennzeichnet, daß die Schenkel (11.2, 11.3; 110.2, 110.3) der U-förmig gebogenen Blattfeder jeweils in zwei nebeneinander ausgebildeten Riegelnasen (13; 113) enden, die zusammen mit einem endeinwärts ausgebildeten Gegenvorsprung (14) eine Rastrinne (15; 115) begrenzen.

11. Schnellverbindungsvorrichtung nach einem der Ansprüche 1 bis 10, dadurch gekennzeichnet, daß die Enden der U-Schenkel (11.2, 11.3; 110.2, 110.3) der Blattfeder im Bereich der Riegelnasen (13; 113) verbreitert sind.

## Claims

1. Wall or frame sections for exhibition structures which can be disassembled and a device for their instant connection to each other, in which respect wall or frame sections to be connected (20, 21; 120, 121) are provided with an aperture for anchorage of the instant connection device (10; 10′, 110; 210) or with an aperture (23; 123) with undercuts (24; 124), that the instant connection device (10; 10′; 110; 210) comprises an adjustable locking element (11; 11′; 110; 210) with a U-shaped bent leaf spring the U-shank ends of which are formed into locking protrusions (13; 13′; 113; 213), and a rotary element (12; 12′; 112; 212), which extends between the U-shanks for the purpose of tensioning and which is movable towards the locking elements, that the two U-shanks are provided with a respective mounting aperture (16; 116; 216) for a thereinbetween arranged rotary element, and that the two U-shanks (11.2, 11.3; 11.2′, 11.3′; 110.2, 110.3; 210.2, 210.3) of the locking element (11; 11′; 110; 210) in an unlocked state spring into a locked position, **characterised in that,** in a locked state, the rotary element (12; 12′; 112; 212) extends between the U-shanks of the locking element and blocks them in the spring-open position, and that the U-shanks can be moved towards each other only in a release position of the rotary element by pulling out the instant connection device from the anchorage aperture against a spring force of the locking element.

2. Instant connection device according to claim 1, **characterised in that** the cross-section of the rotary element (12; 12′; 212) is that of an equilateral triangle with rounded corners and that a socket (18; 218) for a tool to rotate the rotary element is provided at least at one end surface.

3. Instant connection device according to claim 1 and 2, **characterised in that** the leaf spring (11) has at each U-shank (11.2, 11.3) a first outward curvature (19), which co-acts with one of the three corners of the rotary element (12) and causes the spring shanks to spread open, and a second and third outward curvature (19.1, 19.2), which co-acts with the other two corners of the rotary element and causes pretension in the insert plane, and which are arranged so that, during rotation of the rotary element (12) into a clamping position, initially the first outward curvature, and subsequently the other two outward curvatures are additionally loaded.

4. Instant connection device according to one of claims 1 to 3, wherein the rotary element (12) comprises a part which extends through the mounting apertures (16) of an U-shank (11.2, 11.3) outward, **characterised in that** the socket (18) is arranged in the outwardly extending part (12.1) as a through-passage, and that the mounting aperture (16) of the leaf spring's other U-shank (11.3, 11.2) incorporates a pin (29) which is inserted into the aperture (18) of the rotary element (12).

5. Instant connection device according to claim 1 or 2, **characterised in that** the rotary element (212) comprises an end (212.1) which extends to the outside through the mounting apertures (216) of one of the U-shanks (210.2) of the leaf spring (210), to which the turning tool is applied, and that the other end is seated with a mounting trough (212.3) on a mounting protrusion (217), which is formed on a spring tongue (210.4) which is bent out of the other U-shank (210.3).

6. Instant connection device according to claim 1, **characterised in that** the rotary element (112) is arranged as a double-armed pivot level, the one arm (112.2) of which forms the protrusion which acts on the U-shanks (110.2, 110.3), and the other arm (112.3) of which forms an engagement location for a locking tool (130).

7. Instant connection device according to claim 1, **characterised in that** the U-shaped leaf spring is placed at the U-base (110.1) around a mounting pin (111), the axis of which extends vertically to the rotary axis of the rotary element (112), and which extends with the ends into recesses (125) of this element (121) for the purpose of anchoring the leaf spring in one of the parts (121) to be connected.

8. Instant connection device according to claim 7, **characterised in that** the mounting locations (116) of the rotary element, which are formed in the U-shanks (110.2, 110.3) of the leaf spring, are arranged at a distance from the U-base (110.1) of the leaf spring which is greater than the length of the mounting pin (111).

9. Instant connection device according to claim 7 or 8, **characterised in that** the U-shanks (110.2, 110.3) of the leaf spring between the U-base (110.1) and the mounting locations (116) for the rotary element (112) extend in a plane.

10. Instant connection device according to one of claims 1 to 9, **characterised in that** the shanks (11.2, 11.3; 110.2, 110.3) of the U-shaped bent leaf spring terminate in two respective locking protrusions (13; 113), which are arranged side by side and which, together with an end-inwardly arranged counter-protrusion (14), define a detent ridge (15; 115).

11. Instant connection device according to one of claims 1 to 10, **characterised in that** the ends of the U-shanks (11.2, 11.3; 110.2, 110.3) of the spring leaf are broadened in the area of the locking protrusions (13; 113).

## Revendications

1. Pièces de parois ou de tréteaux pour des constructions de foire démontables et un dispositif d'assemblage rapide pour leur assemblage mutuel, les pièces de parois ou de tréteaux (20, 21 ; 120, 121) à assembler les unes aux autres étant munies d'une ouverture pour l'ancrage du dispositif d'assemblage rapide (10 ; 10′ ; 110 ; 210) ou d'une ouverture (23 ; 123 présentant des décrochements (24 ; 124), le dispositif d'assemblage rapide (10 ; 10′ ; 110 ; 210) présentant un corps de verrouillage mobile (11 ; 11′ ; 110 ; 210) avec un ressort à lames courbé en forme de U, dont les extrémités des branches du U ont la forme de taquets de verrouillage (13 ; 13′ ; 113 ; 213), et un corps de rotation (12 ; 12′ ; 112 ; 212) dépassant entre les branches du U pour former croisillon et mobile contre le corps de verrouillage, les deux branches du U étant munies chacune d'une ouverture d'appui (16 ; 116 ; 216) pour le corps de rotation disposé entre elles, et les deux branches du U (11.2, 11.3 ; 11.2′, 11.3′ ;110.2, 110.3 ; 210.2, 210.3) du corps de verrouillage (11 ; 11′ ; 110 ; 210) se détendant élastiquement à l'état déverrouillé vers la position de verrouillage, caractérisé en ce qu'à l'état verrouillé le corps de rotation (12 ; 12′ ; 112 ; 212) dépasse entre les branches du U du corps de verrouillage et les bloque à la position détendue élastiquement et en ce que les branches du U peuvent être déplacées l'une contre l'autre seulement dans la position de déblocage du corps de rotation par retrait du dispositif d'assemblage rapide de l'ouverture d'ancrage à l'encontre de l'élasticité du ressort du corps de verrouillage.

2. Dispositif d'assemblage rapide selon la revendication 1, caractérisé en ce que le corps de rotation (12 ; 12′ ; 112 ; 212) présente la section d'un triangle isocèle avec des angles arrondis et sur un côté frontal au moins une ouverture d'emboîtement (18 ; 218) pour un outil pour la rotation du corps de rotation.

3. Dispositif d'assemblage rapide selon la revendication 1 et 2, caractérisé en ce que les ressorts à lames (11) présentent sur chaque branche du U (11.2, 11.3) une première courbure (19) coopérant avec l'un des trois angles du corps de rotation (12) et causant un écartement des branches du ressort et des deuxième et troisième courbures (19.1, 19.2) coopérant avec les deux autres angles du corps de rotation et causant une précontrainte dans le niveau d'emboîtement, qui sont disposées de telle sorte que lors de la rotation du corps de rotation (12) dans une position de contrainte d'abord la première courbure et ensuite en plus les deux autres courbures sont sollicitées.

4. Dispositif d'assemblage rapide selon l'une des revendications 1 à 3, dans lequel le corps de rotation (12) présente une pièce dépassant vers l'extérieur à travers les ouvertures d'appui (16) d'une branche du U (11.2, 11.3), caractérisé en ce que dans la pièce dépassant vers l'extérieur (12.1) l'ouverture d'emboîtement (18) est conçue comme une ouverture de passage et en ce qu'à travers l'ouverture d'appui (16) de l'autre branche du U (11.3, 11.2) du ressort à lames dépasse un tourillon d'emboîtement (29) qui est emboîtable dans l'ouverture (18) du corps de rotation (12).

5. Dispositif d'assemblage rapide selon la revendication 1 ou 2, caractérisé en ce que le corps de rotation (212) présente une extrémité dépassant vers l'extérieur (212.1) à travers les ouvertures d'appui (216) d'une des branches du U (210.2) du ressort à lames (210), à laquelle peut être monté l'outil de rotation, et en ce que l'autre extrémité repose avec une cuvette d'appui (212.3) sur une saillie d'appui (217), qui est formée sur une languette élastique (210.4) recourbée à partir de l'autre branche du U.

6. Dispositif d'assemblage rapide selon la revendication 1, caractérisé en ce que le corps de rotation (112) est conçu comme un levier pivotant à deux bras dont un bras (112.2) forme la saillie agissant sur la branche du U (110.2, 110.3) et dont l'autre bras (112.3) forme un point d'épaulement pour un outil de verrouillage (130).

7. Dispositif d'assemblage rapide selon la revendication 1, caractérisé en ce que le ressort à lames en forme de U est disposé à la base du U (110.1) autour d'un tourillon d'appui (111) dont l'axe est disposé perpendiculairement par rapport à l'axe de rotation du corps de rotation (112) et qui dépasse pour l'ancrage du ressort à lames dans une des pièces à assembler l'une à l'autre (121) avec les extrémités dans des évidements (125) de cette pièce (121).

8. Dispositif d'assemblage rapide selon la revendication 7, caractérisé en ce que les points d'appui (116) du corps de rotation (112) formés dans les branches du U (110.2, 110.3) du ressort à lames sont disposés à une distance de la base du U (110.1) du ressort à lames, qui est plus grande que la longueur du tourillon d'appui (111).

9. Dispositif d'assemblage rapide selon la revendication 7 ou 8, caractérisé en ce que les branches du U (110.2, 110.3) du ressort à lames entre la base du U (110.1) et les points d'appui (116) pour le corps de rotation (112) sont placées planes.

10. Dispositif d'assemblage rapide selon l'une des revendications 1 à 9, caractérisé en ce que les branches (11.2, 11.3 ; 110.2, 110.3) du ressort à lames recourbé en forme de U se terminent en deux taquets de verrouillage (13 ; 113) formés l'un à côté de l'autre, qui délimitent ensemble avec une contre-saillie (14) formée vers l'extrémité intérieure une rainure d'arrêt (15 ; 115).

11. Dispositif d'assemblage rapide selon l'une des revendications 1 à 10, caractérisé en ce que les extrémités des branches du U (11.2, 11.3 ; 110.2, 110.3) du ressort à lames sont élargies dans la zone des taquets de verrouillage (13 ; 113).
